# EUROPEAN PATENT SPECIFICATION

(11) **EP 3 437 254 B1**
(45) Date of publication and mention of the grant of the patent: **16.10.2024**
(21) Application number: 16897435.0
(22) Date of filing: 21.07.2016
(51) Int. Cl.: H04L 41/044, H04L 41/0803, H04L 41/0233, G06F 9/455, H04L 41/40, H04L 41/0895

(54) **DEVICE AND METHOD FOR NFV LIFE CYCLE MANAGEMENT USING CONFIGURATION MANAGEMENT FUNCTIONS**
VORRICHTUNG UND VERFAHREN FÜR NFV-LEBENSZYKLUSVERWALTUNG MIT KONFIGURATIONSMANAGEMENTFUNKTIONEN
DISPOSITIF ET PROCÉDÉ POUR UNE GESTION DE CYCLE DE VIE DE NFV À L'AIDE DE FONCTIONS DE GESTION DE CONFIGURATION

(30) Priority: 30.03.2016 US 201662315387 P
(43) Date of publication of application: 06.02.2019
(73) Proprietor: Intel Corporation, Santa Clara, CA 95054 (US)
(72) Inventor: CHOU, Joey, Scottsdale, Arizona 85258 (US)
(74) Representative: Goddar, Heinz J.
(86) International application number: PCT/US2016/043243
(87) International publication number: WO 2017/171904

(56) References cited:
- US-A1- 2014 201 374
- US-A1- 2015 063 166
- US-A1- 2015 365 352
- US-A1- 2015 365 352
- US-A1- 2016 006 822
- "3rd Generation Partnership Project; Technical Specification Group Services and System Aspects; Telecommunication Management; Configuration Management (CM) for mobile networks that include virtualized network functions; Requirements (Release 14)", 3GPP STANDARD; 3GPP TS 28.510, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG5, no. V0.3.0, 29 February 2016 (2016-02-29), pages 1 - 13, XP051087821
- "3rd Generation Partnership Project; Technical Specification Group Services and System Aspects; Telecommunication management; Study on network management of virtualized networks (Release 13)", 3GPP STANDARD ; TECHNICAL REPORT ; 3GPP TR 32.842, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG5, no. V13.1.0, 18 December 2015 (2015-12-18), pages 1 - 84, XP051294647
- "3rd Generation Partnership Project; Technical Specification Group Services and System Aspects; Telecommunication management; Life Cycle Management (LCM) for mobile networks that include virtualized network functions; Requirements (Release 14)", 3GPP STANDARD; 3GPP TS 28.525, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG5, no. V0.3.0, 4 March 2016 (2016-03-04), pages 1 - 15, XP051087842
- "Telecommunications and Internet Converged Services and Protocols for Advanced Networking (TISPAN); NGN management; OSS Architecture Release 1 Output from Conf call 4th July function Set has been replaced be replaced by Service Interface Group 07TD238 - Ericsson comments on this version are here made", IEEE, EUROPEAN TELECOMMUNICATIONS STANDARDS INSTITUTE (ETSI), 650 ROUTE DES LUCIOLES, SOPHIA ANTIPOLIS CEDEX, F-06921, FRANCE, vol. TISPAN, no. V0.2.6, 1 January 2005 (2005-01-01), XP014030970
- "Telecommunications and Internet Converged Services and Protocols for Advanced Networking (TISPAN); NGN management; Operations Support Systems Architecture; ETSI TS 188 001", TECHNICAL SPECIFICATION, EUROPEAN TELECOMMUNICATIONS STANDARDS INSTITUTE (ETSI), 650 ROUTE DES LUCIOLES, SOPHIA ANTIPOLIS CEDEX, F-06921, FRANCE, vol. TISPAN, no. V1.2.1, 1 March 2006 (2006-03-01), XP014034019
- "Telecommunication management; Study on network management of virtualiz ed networks (Release 13", 3GPP TR 32.842, 21 December 2015 (2015-12-21), XP051294647

## Description

### TECHNICAL FIELD

This patent application relates to the technical field of radio access networks, in particular to Network Function Virtualization (NFV) in cellular networks, including Third Generation Partnership Project Long Term Evolution (3GPP LTE) networks and LTE advanced (LTE-A) networks as well as 4^{th} generation (4G) networks and 5^{th} generation (5G) networks and to NFV performance measurements.

### BACKGROUND

The use of 3GPP LTE systems (including LTE and LTE-Advanced systems) has increased due to both an increase in the types of devices user equipment (UEs) using network resources as well as the amount of data and bandwidth being used by various applications, such as video streaming, operating on these UEs. As a result, 3GPP LTE systems continue to develop, with the next generation wireless communication system, 5G, to improve access to information and data sharing. 5G looks to provide a unified network/system that is able to meet vastly different and sometime conflicting performance dimensions and services driven by disparate services and applications while maintaining compatibility with legacy UEs and applications.

With the vast increase in number and diversity of communication devices, the corresponding network environment, including routers, switches, bridges, gateways, firewalls, and load balancers, has become increasingly complicated. To add complexity to the variety of services provided by the network devices, many physical implementations of the network devices are propriety and may be unable to incorporate new or adjusted physical components to compensate for different network conditions. This has led to the development of Network Function Virtualization (NFV), which may provide a virtualized environment able to provide any network function or service able to be delivered on Commercial Off-The-Shelf (COTS) servers in a data center as software applications called Virtual Network Functions (VNFs). The use of NFV may provide flexibility in configuring network elements, enabling dynamic network optimization and quicker adaptation of new technologies. However, management of VNFs, including activation/deactivation and adjustment or modification, using legacy 3GPP management systems is difficult and may negatively impact legacy systems.

3GPP TS 28.510, "Telecommunication Management; Configuration Management (CM) for mobile networks that include virtualized network functions; become increasingly complicated. To add complexity to the variety of services provided by the network devices, many physical implementations of the network devices are propriety and may be unable to incorporate new or adjusted physical components to compensate for different network conditions. This has led to the development of Network Function Virtualization (NFV), which may provide a virtualized environment able to provide any network function or service able to be delivered on Commercial Off-The-Shelf (COTS) servers in a data center as software applications called Virtual Network Functions (VNFs). The use of NFV may provide flexibility in configuring network elements, enabling dynamic network optimization and quicker adaptation of new technologies. However, management of VNFs, including activation/deactivation and adjustment or modification, using legacy 3GPP management systems is difficult and may negatively impact legacy systems.

3GPP TS 28.510, "Telecommunication Management; Configuration Management (CM) for mobile networks that include virtualized network functions; Requirements (Release 14)", Version 0.3.0, February 2016, specifies the requirements applicable to Configuration Management (CM) of virtualized network functions which can be part of EPC or IMS.

3GPP TS 28.525, "Telecommunication Management; Life Cycle Management (LCM) for mobile networks that include virtualized network functions; Requirements (Release 14)", Version 0.3.0, March 2016, specifies the requirements applicable to Lifecycle Management (LCM) of virtualized network functions which can be part of EPC or IMS.

3GPP TS 32.842, "Telecommunication Management; Study on network management of virtualized networks (Release 13)", Version 13.1.0, December 2015, investigates how virtualized networks can be managed. It investigates the relations of management architecture and management functions between virtualized network, non-virtualized networks and mixed networks. Whether the existing management architecture, management function and management models could be maximum reused and enhanced to satisfy the inclusion of the virtualized network management function are also studied.

### BRIEF DESCRIPTION OF THE FIGURES

The invention is defined by the subject matter of the independent claims. Advantageous embodiments are subject to the dependent claims.

### BRIEF DESCRIPTION OF THE FIGURES

In the figures, which are not necessarily drawn to scale, like numerals may describe similar components in different views. Like numerals having different letter suffixes may represent different instances of similar components. The figures illustrate generally, by way of example, but not by way of limitation, various embodiments discussed in the present document.
FIG. 1 is a functional diagram of a wireless network in which various embodiments can be implemented.
FIG. 2 illustrates components of a communication device in which various embodiments can be implemented.
FIG. 3 illustrates a block diagram of a communication device in which various embodiments can be implemented.
FIG. 4 illustrates another block diagram of a communication device in which various embodiments can be implemented.
FIG. 5 illustrates a NFV network management architecture in which various embodiments can be implemented.
FIG. 6 illustrates a flow diagram of Managed Object Instance (MOI) creation triggered by a VNF instantiation request from a network manager (NM) in accordance with various embodiments.
FIG. 7 illustrates a flow diagram of MOI creation triggered by a VNF instantiation request from an element manager (EM) in accordance with various embodiments.
FIG. 8 illustrates a flow diagram of a VNF termination triggered by a MOI deletion request from an NM.
FIG. 9 illustrates a flow diagram of a MOI deletion triggered by VNF termination from an EM.

### DETAILED DESCRIPTION

The following description and the drawings sufficiently illustrate specific embodiments to enable those skilled in the art to practice them. Other embodiments may incorporate structural, logical, electrical, process, and other changes. Portions and features of some embodiments may be included in, or substituted for, those of other embodiments.

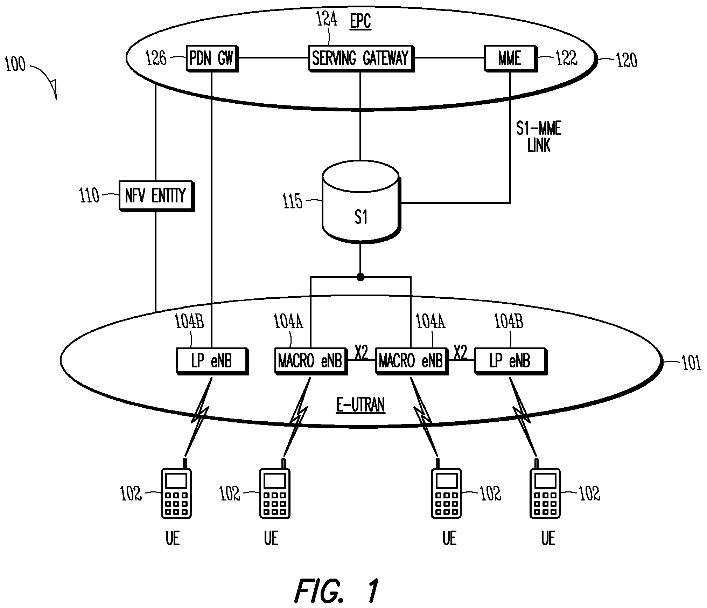

FIG. 1 shows an example of a portion of an end-to-end network architecture of a Long Term Evolution (LTE) network with various components of the network. At least some of the network devices with which the UEs 102 are connected and that provide network functionality, such as the gateways and other servers, may be provided as part of a NFVI rather than using physical hardware components, as described herein. A NFV entity 110 may separately control or be in communication with at least some of the physical components. As used herein, an LTE network refers to both LTE and LTE Advanced (LTE-A) networks as well as other versions of LTE networks to be developed. The network 100 may comprise a radio access network (RAN) (e.g., as depicted, the E-UTRAN or evolved universal terrestrial radio access network) 101 and core network 120 (e.g., shown as an evolved packet core (EPC)) coupled together through an S1 interface 115. For convenience and brevity, only a portion of the core network 120, as well as the RAN 101, is shown in the example.

The core network 120 may include a mobility management entity (MME) 122, serving gateway (serving GW) 124, and packet data network gateway (PDN GW) 126. The RAN 101 may include evolved node Bs (eNBs) 104 (which may operate as base stations) for communicating with user equipment (UE) 102. The eNBs 104 may include macro eNBs 104a and low power (LP) eNBs 104b. The eNBs 104 and UEs 102 may employ the techniques as described herein.

The MME 122 may be similar in function to the control plane of legacy Serving GPRS Support Nodes (SGSN). The MME 122 may manage mobility aspects in access such as gateway selection and tracking area list management. The serving GW 124 may terminate the interface toward the RAN 101, and route data packets between the RAN 101 and the core network 120. In addition, the serving GW 124 may be a local mobility anchor point for inter-eNB handovers and also may provide an anchor for inter-3GPP mobility. Other responsibilities may include lawful intercept, charging, and some policy enforcement. The serving GW 124 and the MME 122 may be implemented in one physical node or separate physical nodes.

The PDN GW 126 may terminate a SGi interface toward the packet data network (PDN). The PDN GW 126 may route data packets between the EPC 120 and the external PDN, and may perform policy enforcement and charging data collection. The PDN GW 126 may also provide an anchor point for mobility devices with non-LTE access. The external PDN can be any kind of IP network, as well as an IP Multimedia Subsystem (IMS) domain. The PDN GW 126 and the serving GW 124 may be implemented in a single physical node or separate physical nodes.

The eNBs 104 (macro and micro) may terminate the air interface protocol and may be the first point of contact for a UE 102. An eNB 104 may fulfill various logical functions for the RAN 101 including, but not limited to, RNC (radio network controller functions) such as radio bearer management, uplink and downlink dynamic radio resource management and data packet scheduling, and mobility management. UEs 102 may be configured to communicate orthogonal frequency division multiplexed (OFDM) communication signals with an eNB 104 over a multicarrier communication channel in accordance with an OFDMA communication technique. The OFDM signals may comprise a plurality of orthogonal subcarriers.

The S1 interface 115 may be the interface that separates the RAN 101 and the EPC 120. It may be split into two parts: the S1-U, which may carry traffic data between the eNBs 104 and the serving GW 124, and the S1-MME, which may be a signaling interface between the eNBs 104 and the MME 122. The X2 interface may be the interface between eNBs 104. The X2 interface may comprise two parts, the X2-C and X2-U. The X2-C may be the control plane interface between the eNBs 104, while the X2-U may be the user plane interface between the eNBs 104.

With cellular networks, LP cells 104b may be typically used to extend coverage to indoor areas where outdoor signals do not reach well, or to add network capacity in areas with dense usage. In particular, it may be desirable to enhance the coverage of a wireless communication system using cells of different sizes, macrocells, microcells, picocells, and femtocells, to boost system performance. The cells of different sizes may operate on the same frequency band, or may operate on different frequency bands with each cell operating in a different frequency band or only cells of different sizes operating on different frequency bands. As used herein, the term LP eNB refers to any suitable relatively LP eNB for implementing a smaller cell (smaller than a macro cell) such as a femtocell, a picocell, or a microcell. Femtocell eNBs may be typically provided by a mobile network operator to its residential or enterprise customers. A femtocell may be typically the size of a residential gateway or smaller and generally connect to a broadband line. The femtocell may connect to the mobile operator's mobile network and provide extra coverage in a range of typically 30 to 50 meters. Thus, a LP eNB 104b might be a femtocell eNB since it is coupled through the PDN GW 126. Similarly, a picocell may be a wireless communication system typically covering a small area, such as in-building (offices, shopping malls, train stations, etc.), or more recently in-aircraft. A picocell eNB may generally connect through the X2 link to another eNB such as a macro eNB through its base station controller (BSC) functionality. Thus, LP eNB may be implemented with a picocell eNB since it may be coupled to a macro eNB 104a via an X2 interface. Picocell eNBs or other LP eNBs LP eNB 104b may incorporate some or all functionality of a macro eNB LP eNB 104a. In some cases, this may be referred to as an access point base station or enterprise femtocell.

The core network 120 may also contain a Policy and Charging Rules Function (PCRF) (not shown) and a Home location register (HLR) (not shown). The PCRF may determine policy rules in the network core and accesses subscriber databases and other specialized functions, such as a charging system, in a centralized manner. The PCRF may aggregate information to and from the network, OSSs, and other sources, making policy decisions for each network subscriber active. The HLR is a central database that contains details of each subscriber that is authorized to use the core network 120.

Communication over an LTE network may be split up into 10ms radio frames, each of which may contain ten 1ms subframes. Each subframe of the frame, in turn, may contain two slots of 0.5ms. Each subframe may be used for uplink (UL) communications from the UE 102 to the eNB 104 or downlink (DL) communications from the eNB 104 to the UE. The eNB 104 may allocate a greater number of DL communications than UL communications in a particular frame. The eNB 104 may schedule transmissions over a variety of frequency bands. Each slot of the subframe may contain 6-7 OFDM symbols, depending on the system used. Each subframe may contain 12 subcarriers. In the 5G system, however, the frame size (ms) and number of subframes within a frame may be different from that of a 4G or LTE system. The subframe size may also vary in the 5G system from frame to frame. The 5G system may span 5 times the frequency of the LTE/4G system, in which case the frame size of the 5G system may be 5 times smaller than that of the LTE/4G system.

A downlink resource grid may be used for downlink transmissions from an eNB 104 to a UE 102, while an uplink resource grid may be used for uplink transmissions from a UE 102 to an eNB 104 or from a UE 102 to another UE 102. The resource grid may be a time-frequency grid, which is the physical resource in the downlink in each slot. The smallest time-frequency unit in a resource grid may be denoted as a resource element (RE). Each column and each row of the resource grid may correspond to one OFDM symbol and one OFDM subcarrier, respectively. The resource grid may contain resource blocks (RBs) that describe the mapping of physical channels to resource elements and physical RBs (PRBs). A PRB may be the smallest unit of resources that can be allocated to a UE. A RB in some embodiments may be 180 kHz wide in frequency and 1 slot long in time. In frequency, RBs may be either 12 x 15 kHz subcarriers or 24 x 7.5 kHz subcarriers wide, dependent on the system bandwidth. In Frequency Division Duplexing (FDD) systems, both the uplink and downlink frames may be 10ms and frequency (full-duplex) or time (half-duplex) separated. In TDD systems, the uplink and downlink subframes may be transmitted on the same frequency and are multiplexed in the time domain. The duration of the resource grid 400 in the time domain corresponds to one subframe or two resource blocks. Each resource grid may comprise 12 (subcarriers) *14 (symbols) =168 resource elements.

TDD systems may include UL, DL and, unlike FDD systems, special subframes due to the time-division aspect of the system when switching between UL and DL subframes. In particular, the special subframe may be preceded by a DL or UL subframe (and succeeded by a subframe of the opposite type) and may include both a UL and DL control region. A guard period may be reserved at the initiation of the special subframe to permit the UE 102 to switch between the receiver and transmitter chain.

Each OFDM symbol may contain a cyclic prefix (CP) which may be used to effectively eliminate Inter Symbol Interference (ISI), and a Fast Fourier Transform (FFT) period. The duration of the CP may be determined by the highest anticipated degree of delay spread. Although distortion from the preceding OFDM symbol may exist within the CP, with a CP of sufficient duration, preceding OFDM symbols do not enter the FFT period. Once the FFT period signal is received and digitized, the receiver may ignore the signal in the CP.

There may be several different physical downlink channels that are conveyed using such resource blocks, including the physical downlink control channel (PDCCH) and the physical downlink shared channel (PDSCH). Each downlink subframe may be partitioned into the PDCCH and the PDSCH. The PDCCH may normally occupy the first two symbols of each subframe and carry, among other things, information about the transport format and resource allocations related to the PDSCH channel, as well as H-ARQ information related to the uplink shared channel. The PDSCH may carry user data and higher layer signaling to a UE and occupy the remainder of the subframe. Typically, downlink scheduling (assigning control and shared channel resource blocks to UEs within a cell) may be performed at the eNB based on channel quality information provided from the UEs to the eNB, and then the downlink resource assignment information may be sent to each UE on the PDCCH used for (assigned to) the UE. The PDCCH may contain downlink control information (DCI) in one of a number of formats that indicate to the UE how to find and decode data, transmitted on PDSCH in the same subframe, from the resource grid. The DCI format may provide details such as number of resource blocks, resource allocation type, modulation scheme, transport block, redundancy version, coding rate etc. Each DCI format may have a cyclic redundancy code (CRC) and be scrambled with a Radio Network Temporary Identifier (RNTI) that identifies the target UE for which the PDSCH is intended. Use of the UE-specific RNTI may limit decoding of the DCI format (and hence the corresponding PDSCH) to only the intended UE.

In addition to the PDCCH, an enhanced PDCCH (EPDCCH) may be used by the eNB 104 and UE 102. Unlike the PDCCH, the EPDCCH may be disposed in the resource blocks normally allocated for the PDSCH. Different UEs may have different EPDCCH configurations that are configured via Radio Resource Control (RRC) signaling. Each UE 102 may be configured with sets of EPDCCHs, and the configuration can also be different between the sets. Each EPDCCH set may have 2, 4, or 8 PRB pairs. Resource blocks configured for EPDCCHs in a particular subframe may be used for PDSCH transmission if the resource blocks are not used for the EPDCCH transmissions during the subframe.

In order to enable retransmission of missing or erroneous data, the Hybrid Automatic Repeat Request (HARQ) scheme may be used to provide the feedback on success or failure of a decoding attempt to the transmitter after each received data block. When an eNB 104 sends data to the UE 102 in a PDSCH (or 5G PDSCH, referred to as an xPDSCH), the data packets may be sent together with indicators in a PDCCH in the same subframe that inform the UE 102 about the scheduling of the PDSCH, including the transmission time and other scheduling information of the transmitted data. For each PDSCH codeword that the UE 102 receives, the UE 102 may respond with an ACK when the codeword is successfully decoded, or a NACK when the codeword is not successfully decoded. The eNB 104 may expect the ACK/NACK feedback after a predetermined number of subframes from the subframe in which the PDSCH data is sent. Upon receiving a NACK from the UE 102, the eNB 104 may retransmit the transport block or skip the retransmission if the retransmission number exceeds a maximum value. The ACK/NACK for the corresponding the PDSCH may be transmitted by the UE four subframes after the PDSCH is received from the eNB 104. Depending on the number of codewords present, HARQ-ACK information corresponding to a PDSCH may contain, for example, 1 or 2 information bits (DCI formats 1a and 1b, respectively). The HARQ-ACK bits may then be processed, as per the PUCCH.

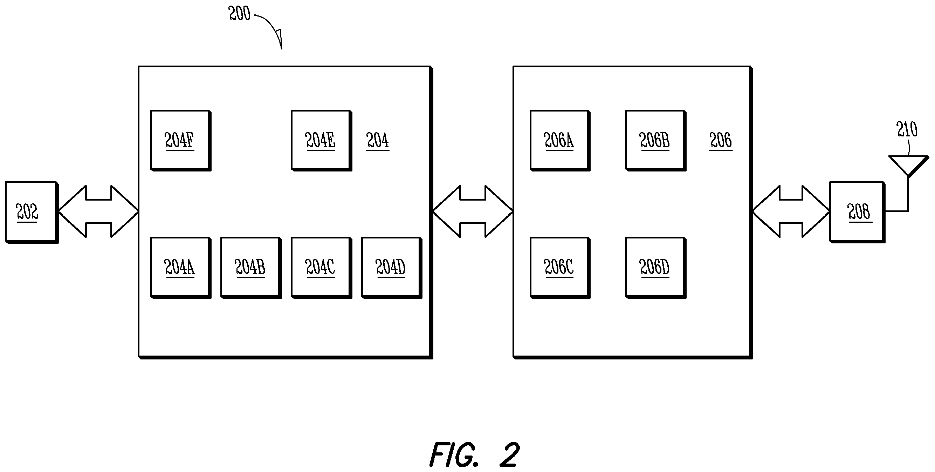

Embodiments described herein may be implemented into a system using any suitably configured hardware and/or software. FIG. 2 illustrates components of a UE. At least some of the components shown may be used in the UE 102 (or eNB 104 or NFV entity) shown in FIG. 1. The UE 200 and other components may be configured to use the synchronization signals as described herein. The UE 200 may be one of the UEs 102 shown in FIG. 1 and may be a stationary, non-mobile device or may be a mobile device. The UE 200 may include application circuitry 202, baseband circuitry 204, Radio Frequency (RF) circuitry 206, front-end module (FEM) circuitry 208 and one or more antennas 210, coupled together at least as shown. At least some of the baseband circuitry 204, RF circuitry 206, and FEM circuitry 208 may form a transceiver. Other network elements, such as the eNB may contain some or all of the components shown in FIG. 2. Other of the network elements, such as the MME, may contain an interface, such as the S 1 interface, to communicate with the eNB over a wired connection regarding the UE.

The application or processing circuitry 202 may include one or more application processors. For example, the application circuitry 202 may include circuitry such as, but not limited to, one or more single-core or multi-core processors. The processor(s) may include any combination of general-purpose processors and dedicated processors (e.g., graphics processors, application processors, etc.). The processors may be coupled with and/or may include memory/storage and may be configured to execute instructions stored in the memory/storage to enable various applications and/or operating systems to run on the system.

The baseband circuitry 204 may include circuitry such as, but not limited to, one or more single-core or multi-core processors. The baseband circuitry 204 may include one or more baseband processors and/or control logic to process baseband signals received from a receive signal path of the RF circuitry 206 and to generate baseband signals for a transmit signal path of the RF circuitry 206. Baseband processing circuity 204 may interface with the application circuitry 202 for generation and processing of the baseband signals and for controlling operations of the RF circuitry 206. For example the baseband circuitry 204 may include a second generation (2G) baseband processor 204a, third generation (3G) baseband processor 204b, fourth generation (4G) baseband processor 204c, and/or other baseband processor(s) 204d for other existing generations, generations in development or to be developed in the future (e.g., fifth generation (5G), 5G, etc.). The baseband circuitry 204 (e.g., one or more of baseband processors 204a-d) may handle various radio control functions that enable communication with one or more radio networks via the RF circuitry 206. The radio control functions may include, but are not limited to, signal modulation/demodulation, encoding/decoding, radio frequency shifting, etc. Modulation/demodulation circuitry of the baseband circuitry 204 may include FFT, precoding, and/or constellation mapping/demapping functionality. Encoding/decoding circuitry of the baseband circuitry 204 may include convolution, tail-biting convolution, turbo, Viterbi, and/or Low Density Parity Check (LDPC) encoder/decoder functionality. Embodiments of modulation/demodulation and encoder/decoder functionality are not limited to these examples and may include other suitable functionality in other embodiments.

The baseband circuitry 204 may include elements of a protocol stack such as, for example, elements of an evolved universal terrestrial radio access network (EUTRAN) protocol including, for example, physical (PHY), media access control (MAC), radio link control (RLC), packet data convergence protocol (PDCP), and/or radio resource control (RRC) elements. A central processing unit (CPU) 204e of the baseband circuitry 204 may be configured to run elements of the protocol stack for signaling of the PHY, MAC, RLC, PDCP and/or RRC layers. The baseband circuitry may include one or more audio digital signal processor(s) (DSP) 204f. The audio DSP(s) 204f may be include elements for compression/decompression and echo cancellation and may include other suitable processing elements in other embodiments. Components of the baseband circuitry may be suitably combined in a single chip, a single chipset, or disposed on a same circuit board in some embodiments. Some or all of the constituent components of the baseband circuitry 204 and the application circuitry 202 may be implemented together such as, for example, on a system on a chip (SOC).

The baseband circuitry 204 may provide for communication compatible with one or more radio technologies. For example The baseband circuitry 204 may support communication with an evolved universal terrestrial radio access network (EUTRAN) and/or other wireless metropolitan area networks (WMAN), a wireless local area network (WLAN), a wireless personal area network (WPAN). Embodiments in which the baseband circuitry 204 is configured to support radio communications of more than one wireless protocol may be referred to as multi-mode baseband circuitry. The device can be configured to operate in accordance with communication standards or other protocols or standards, including Institute of Electrical and Electronic Engineers (IEEE) 802.16 wireless technology (WiMax), IEEE 802.11 wireless technology (WiFi) including IEEE 802.11 ad, which operates in the 60 GHz millimeter wave spectrum, various other wireless technologies such as global system for mobile communications (GSM), enhanced data rates for GSM evolution (EDGE), GSM EDGE radio access network (GERAN), universal mobile telecommunications system (UMTS), UMTS terrestrial radio access network (UTRAN), or other 2G, 3G, 4G, 5G, etc. technologies either already developed or to be developed.

RF circuitry 206 may enable communication with wireless networks using modulated electromagnetic radiation through a non-solid medium. In various embodiments, the RF circuitry 206 may include switches, filters, amplifiers, etc. to facilitate the communication with the wireless network. RF circuitry 206 may include a receive signal path which may include circuitry to down-convert RF signals received from the FEM circuitry 208 and provide baseband signals to the baseband circuitry 204. RF circuitry 206 may also include a transmit signal path which may include circuitry to up-convert baseband signals provided by the baseband circuitry 204 and provide RF output signals to the FEM circuitry 208 for transmission.

The RF circuitry 206 may include a receive signal path and a transmit signal path. The receive signal path of the RF circuitry 206 may include mixer circuitry 206a, amplifier circuitry 206b and filter circuitry 206c. The transmit signal path of the RF circuitry 206 may include filter circuitry 206c and mixer circuitry 206a. RF circuitry 206 may also include synthesizer circuitry 206d for synthesizing a frequency for use by the mixer circuitry 206a of the receive signal path and the transmit signal path. The mixer circuitry 206a of the receive signal path may be configured to down-convert RF signals received from the FEM circuitry 208 based on the synthesized frequency provided by synthesizer circuitry 206d. The amplifier circuitry 206b may be configured to amplify the down-converted signals and the filter circuitry 206c may be a low-pass filter (LPF) or bandpass filter (BPF) configured to remove unwanted signals from the down-converted signals to generate output baseband signals. Output baseband signals may be provided to the baseband circuitry 204 for further processing. The output baseband signals may be zero-frequency baseband signals, although this is not a requirement. Mixer circuitry 206a of the receive signal path may comprise passive mixers, although the scope of the embodiments is not limited in this respect.

The mixer circuitry 206a of the transmit signal path may be configured to up-convert input baseband signals based on the synthesized frequency provided by the synthesizer circuitry 206d to generate RF output signals for the FEM circuitry 208. The baseband signals may be provided by the baseband circuitry 204 and may be filtered by filter circuitry 206c. The filter circuitry 206c may include a low-pass filter (LPF), although the scope of the embodiments is not limited in this respect.

The mixer circuitry 206a of the receive signal path and the mixer circuitry 206a of the transmit signal path may include two or more mixers and may be arranged for quadrature downconversion and/or upconversion respectively. The mixer circuitry 206a of the receive signal path and the mixer circuitry 206a of the transmit signal path may include two or more mixers and may be arranged for image rejection (e.g., Hartley image rejection). The mixer circuitry 206a of the receive signal path and the mixer circuitry 206a may be arranged for direct downconversion and/or direct upconversion, respectively. The mixer circuitry 206a of the receive signal path and the mixer circuitry 206a of the transmit signal path may be configured for super-heterodyne operation.

The output baseband signals and the input baseband signals may be analog baseband signals, although the scope of the embodiments is not limited in this respect. In some alternate embodiments, the output baseband signals and the input baseband signals may be digital baseband signals. In these alternate embodiments, the RF circuitry 206 may include analog-to-digital converter (ADC) and digital-to-analog converter (DAC) circuitry and the baseband circuitry 204 may include a digital baseband interface to communicate with the RF circuitry 206.

In some dual-mode embodiments, a separate radio IC circuitry may be provided for processing signals for each spectrum, although the scope of the embodiments is not limited in this respect.

The synthesizer circuitry 206d may be a fractional-N synthesizer or a fractional N/N+1 synthesizer, although the scope of the embodiments is not limited in this respect as other types of frequency synthesizers may be suitable. For example, synthesizer circuitry 206d may be a delta-sigma synthesizer, a frequency multiplier, or a synthesizer comprising a phase-locked loop with a frequency divider.

The synthesizer circuitry 206d may be configured to synthesize an output frequency for use by the mixer circuitry 206a of the RF circuitry 206 based on a frequency input and a divider control input. The synthesizer circuitry 206d may be a fractional N/N+1 synthesizer.

Frequency input may be provided by a voltage controlled oscillator (VCO), although that is not a requirement. Divider control input may be provided by either the baseband circuitry 204 or the applications processor 202 depending on the desired output frequency. A divider control input (e.g., N) may be determined from a look-up table based on a channel indicated by the applications processor 202.

Synthesizer circuitry 206d of the RF circuitry 206 may include a divider, a delay-locked loop (DLL), a multiplexer and a phase accumulator. The divider may be a dual modulus divider (DMD) and the phase accumulator may be a digital phase accumulator (DPA). The DMD may be configured to divide the input signal by either N or N+1 (e.g., based on a carry out) to provide a fractional division ratio. In some example embodiments, the DLL may include a set of cascaded, tunable, delay elements, a phase detector, a charge pump and a D-type flip-flop. In these embodiments, the delay elements may be configured to break a VCO period up into Nd equal packets of phase, where Nd is the number of delay elements in the delay line. In this way, the DLL provides negative feedback to help ensure that the total delay through the delay line is one VCO cycle.

Synthesizer circuitry 206d may be configured to generate a carrier frequency as the output frequency, while in other embodiments, the output frequency may be a multiple of the carrier frequency (e.g., twice the carrier frequency, four times the carrier frequency) and used in conjunction with quadrature generator and divider circuitry to generate multiple signals at the carrier frequency with multiple different phases with respect to each other. The output frequency may be a LO frequency (f_{LO}). The RF circuitry 206 may include an IQ/polar converter.

FEM circuitry 208 may include a receive signal path which may include circuitry configured to operate on RF signals received from one or more antennas 210, amplify the received signals and provide the amplified versions of the received signals to the RF circuitry 206 for further processing. FEM circuitry 208 may also include a transmit signal path which may include circuitry configured to amplify signals for transmission provided by the RF circuitry 206 for transmission by one or more of the one or more antennas 210.

The FEM circuitry 208 may include a TX/RX switch to switch between transmit mode and receive mode operation. The FEM circuitry may include a receive signal path and a transmit signal path. The receive signal path of the FEM circuitry may include a low-noise amplifier (LNA) to amplify received RF signals and provide the amplified received RF signals as an output (e.g., to the RF circuitry 206). The transmit signal path of the FEM circuitry 208 may include a power amplifier (PA) to amplify input RF signals (e.g., provided by RF circuitry 206), and one or more filters to generate RF signals for subsequent transmission (e.g., by one or more of the one or more antennas 210.

The UE 200 may include additional elements such as, for example, memory/storage, display, camera, sensor, and/or input/output (I/O) interface as described in more detail below. The UE 200 described herein may be part of a portable wireless communication device, such as a personal digital assistant (PDA), a laptop or portable computer with wireless communication capability, a web tablet, a wireless telephone, a smartphone, a wireless headset, a pager, an instant messaging device, a digital camera, an access point, a television, a medical device (e.g., a heart rate monitor, a blood pressure monitor, etc.), or other device that may receive and/or transmit information wirelessly. The UE 200 may include one or more user interfaces designed to enable user interaction with the system and/or peripheral component interfaces designed to enable peripheral component interaction with the system. For example, the UE 200 may include one or more of a keyboard, a keypad, a touchpad, a display, a sensor, a non-volatile memory port, a universal serial bus (USB) port, an audio jack, a power supply interface, one or more antennas, a graphics processor, an application processor, a speaker, a microphone, and other I/O components. The display may be an LCD or LED screen including a touch screen. The sensor may include a gyro sensor, an accelerometer, a proximity sensor, an ambient light sensor, and a positioning unit. The positioning unit may communicate with components of a positioning network, e.g., a global positioning system (GPS) satellite.

The antennas 210 may comprise one or more directional or omnidirectional antennas, including, for example, dipole antennas, monopole antennas, patch antennas, loop antennas, microstrip antennas or other types of antennas suitable for transmission of RF signals. In some multiple-input multiple-output (MIMO) embodiments, the antennas 210 may be effectively separated to take advantage of spatial diversity and the different channel characteristics that may result.

Although the UE 200 is illustrated as having several separate functional elements, one or more of the functional elements may be combined and may be implemented by combinations of software-configured elements, such as processing elements including digital signal processors (DSPs), and/or other hardware elements. For example, some elements may comprise one or more microprocessors, DSPs, field-programmable gate arrays (FPGAs), application specific integrated circuits (ASICs), radio-frequency integrated circuits (RFICs) and combinations of various hardware and logic circuitry for performing at least the functions described herein. The functional elements may refer to one or more processes operating on one or more processing elements.

Embodiments of the invention may be implemented in one or a combination of hardware, firmware and software. Embodiments may also be implemented as instructions stored on a computer-readable storage device, which may be read and executed by at least one processor to perform the operations described herein. A computer-readable storage device may include any non-transitory mechanism for storing information in a form readable by a machine (e.g., a computer). For example, a computer-readable storage device may include read-only memory (ROM), random-access memory (RAM), magnetic disk storage media, optical storage media, flash-memory devices, and other storage devices and media. Some embodiments may include one or more processors and may be configured with instructions stored on a computer-readable storage device.

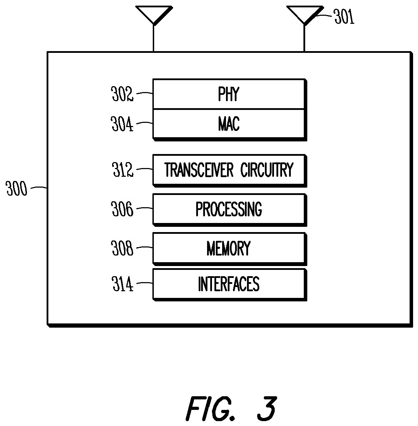

FIG. 3 is a block diagram of a communication device. The device may be a UE or eNB or NFV entity, for example, such as the UE 102 or eNB 104 shown in FIG. 1 that may be configured to track the UE as described herein. The physical layer circuitry 302 may perform various encoding and decoding functions that may include formation of baseband signals for transmission and decoding of received signals. The communication device 300 may also include medium access control layer (MAC) circuitry 304 for controlling access to the wireless medium. The communication device 300 may also include processing circuitry 306, such as one or more single-core or multi-core processors, and memory 308 arranged to perform the operations described herein. The physical layer circuitry 302, MAC circuitry 304 and processing circuitry 306 may handle various radio control functions that enable communication with one or more radio networks compatible with one or more radio technologies. The radio control functions may include signal modulation, encoding, decoding, radio frequency shifting, etc. For example, similar to the device shown in FIG. 2communication may be enabled with one or more of a WMAN, a WLAN, and a WPAN. The communication device 300 can be configured to operate in accordance with 3GPP standards or other protocols or standards, including WiMax, WiFi, WiGig, GSM, EDGE, GERAN, UMTS, UTRAN, or other 3G, 3G, 4G, 5G, etc. technologies either already developed or to be developed. The communication device 300 may include transceiver circuitry 312 to enable communication with other external devices wirelessly and interfaces 314 to enable wired communication with other external devices. As another example, the transceiver circuitry 312 may perform various transmission and reception functions such as conversion of signals between a baseband range and a Radio Frequency (RF) range.

The antennas 301 may comprise one or more directional or omnidirectional antennas, including, for example, dipole antennas, monopole antennas, patch antennas, loop antennas, microstrip antennas or other types of antennas suitable for transmission of RF signals. In some MIMO embodiments, the antennas 301 may be effectively separated to take advantage of spatial diversity and the different channel characteristics that may result.

Although the communication device 300 is illustrated as having several separate functional elements, one or more of the functional elements may be combined and may be implemented by combinations of software-configured elements, such as processing elements including DSPs, and/or other hardware elements. For example, some elements may comprise one or more microprocessors, DSPs, FPGAs, ASICs, RFICs and combinations of various hardware and logic circuitry for performing at least the functions described herein. The functional elements may refer to one or more processes operating on one or more processing elements. Embodiments may be implemented in one or a combination of hardware, firmware and software. Embodiments may also be implemented as instructions stored on a computer-readable storage device, which may be read and executed by at least one processor to perform the operations described herein.

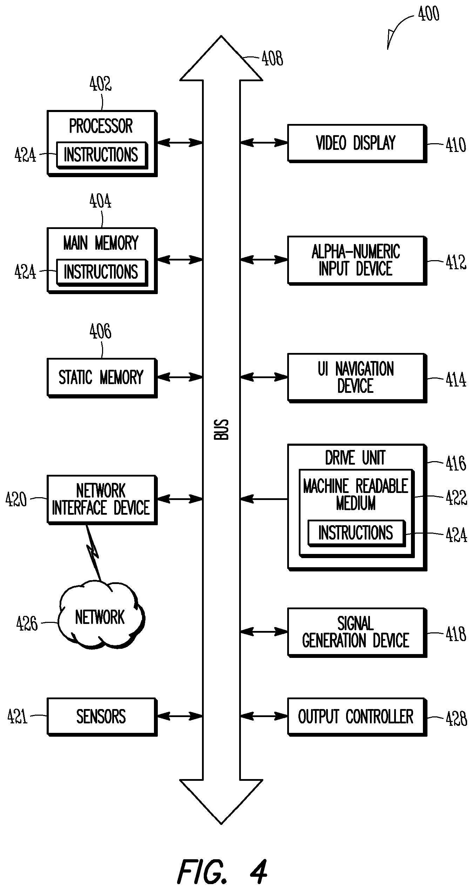

FIG. 4 illustrates another block diagram of a communication device. Alternatively, the communication device 400 may operate as a standalone device or may be connected (e.g., networked) to other communication devices. In a networked deployment, the communication device 400 may operate in the capacity of a server communication device, a client communication device, or both in server-client network environments. In an example, the communication device 400 may act as a peer communication device in peer-to-peer (P2P) (or other distributed) network environment. The communication device 400 may be a UE, eNB, PC, a tablet PC, a STB, a PDA, a mobile telephone, a smart phone, a web appliance, a network router, switch or bridge, or any communication device capable of executing instructions (sequential or otherwise) that specify actions to be taken by that communication device. Further, while only a single communication device is illustrated, the term "communication device" shall also be taken to include any collection of communication devices that individually or jointly execute a set (or multiple sets) of instructions to perform any one or more of the methodologies discussed herein, such as cloud computing, software as a service (SaaS), other computer cluster configurations.

Examples implementations, as described herein, may include, or may operate on, logic or a number of components, modules, or mechanisms. Modules are tangible entities (e.g., hardware) capable of performing specified operations and may be configured or arranged in a certain manner. In an example, circuits may be arranged (e.g., internally or with respect to external entities such as other circuits) in a specified manner as a module. In an example, the whole or part of one or more computer systems (e.g., a standalone, client or server computer system) or one or more hardware processors may be configured by firmware or software (e.g., instructions, an application portion, or an application) as a module that operates to perform specified operations. In an example, the software may reside on a communication device readable medium. In an example, the software, when executed by the underlying hardware of the module, causes the hardware to perform the specified operations.

Accordingly, the term "module" is understood to encompass a tangible entity, be that an entity that is physically constructed, specifically configured (e.g., hardwired), or temporarily (e.g., transitorily) configured (e.g., programmed) to operate in a specified manner or to perform part or all of any operation described herein. Considering examples in which modules are temporarily configured, each of the modules need not be instantiated at any one moment in time. For example, where the modules comprise a general-purpose hardware processor configured using software, the general-purpose hardware processor may be configured as respective different modules at different times. Software may accordingly configure a hardware processor, for example, to constitute a particular module at one instance of time and to constitute a different module at a different instance of time.

Communication device (e.g., computer system) 400 may include a hardware processor 402 (e.g., a central processing unit (CPU), a graphics processing unit (GPU), a hardware processor core, or any combination thereof), a main memory 404 and a static memory 406, some or all of which may communicate with each other via an interlink (e.g., bus) 408. The communication device 400 may further include a display unit 410, an alphanumeric input device 412 (e.g., a keyboard), and a user interface (UI) navigation device 414 (e.g., a mouse). In an example, the display unit 410, input device 412 and UI navigation device 414 may be a touch screen display. The communication device 400 may additionally include a storage device (e.g., drive unit) 416, a signal generation device 418 (e.g., a speaker), a network interface device 420, and one or more sensors 421, such as a global positioning system (GPS) sensor, compass, accelerometer, or other sensor. The communication device 400 may include an output controller 428, such as a serial (e.g., universal serial bus (USB), parallel, or other wired or wireless (e.g., infrared (IR), near field communication (NFC), etc.) connection to communicate or control one or more peripheral devices (e.g., a printer, card reader, etc.).

The storage device 416 may include a communication device readable medium 422 on which is stored one or more sets of data structures or instructions 424 (e.g., software) embodying or utilized by any one or more of the techniques or functions described herein. The instructions 424 may also reside, completely or at least partially, within the main memory 404, within static memory 406, or within the hardware processor 402 during execution thereof by the communication device 400. In an example, one or any combination of the hardware processor 402, the main memory 404, the static memory 406, or the storage device 416 may constitute communication device readable media.

While the communication device readable medium 422 is illustrated as a single medium, the term "communication device readable medium" may include a single medium or multiple media (e.g., a centralized or distributed database, and/or associated caches and servers) configured to store the one or more instructions 424.

The term "communication device readable medium" may include any medium that is capable of storing, encoding, or carrying instructions for execution by the communication device 400 and that cause the communication device 400 to perform any one or more of the techniques of the present disclosure, or that is capable of storing, encoding or carrying data structures used by or associated with such instructions. Non-limiting communication device readable medium examples may include solid-state memories, and optical and magnetic media. Specific examples of communication device readable media may include: non-volatile memory, such as semiconductor memory devices (e.g., Electrically Programmable Read-Only Memory (EPROM), Electrically Erasable Programmable Read-Only Memory (EEPROM)) and flash memory devices; magnetic disks, such as internal hard disks and removable disks; magneto-optical disks; Random Access Memory (RAM); and CD-ROM and DVD-ROM disks. In some examples, communication device readable media may include non-transitory communication device readable media. In some examples, communication device readable media may include communication device readable media that is not a transitory propagating signal.

The instructions 424 may further be transmitted or received over a communications network 426 using a transmission medium via the network interface device 420 utilizing any one of a number of transfer protocols (e.g., frame relay, internet protocol (IP), transmission control protocol (TCP), user datagram protocol (UDP), hypertext transfer protocol (HTTP), etc.). Example communication networks may include a local area network (LAN), a wide area network (WAN), a packet data network (e.g., the Internet), mobile telephone networks (e.g., cellular networks), Plain Old Telephone (POTS) networks, and wireless data networks (e.g., Institute of Electrical and Electronics Engineers (IEEE) 802.11 family of standards known as Wi-Fi^{®}, IEEE 802.16 family of standards known as WiMax^{®}), IEEE 802.15.4 family of standards, a Long Term Evolution (LTE) family of standards, a Universal Mobile Telecommunications System (UMTS) family of standards, peer-to-peer (P2P) networks, among others. In an example, the network interface device 420 may include one or more physical jacks (e.g., Ethernet, coaxial, or phone jacks) or one or more antennas to connect to the communications network 426. In an example, the network interface device 420 may include a plurality of antennas to wirelessly communicate using at least one of single-input multiple-output (SIMO), MIMO, or multiple-input single-output (MISO) techniques. In some examples, the network interface device 420 may wirelessly communicate using Multiple User MIMO techniques. The term "transmission medium" shall be taken to include any intangible medium that is capable of storing, encoding or carrying instructions for execution by the communication device 400, and includes digital or analog communications signals or other intangible medium to facilitate communication of such software.

The network and components shown in FIGS. 1-4 may be implemented in hardware or software or a combination thereof. In particular, as discussed above, the network may be wholly or partially implemented using network virtualization. Network virtualization has started to be used in various types of networks, particularly in server deployments and data centers. Virtual Network Functions (VNFs) are software implementations of network functions such as the MME, HLR, SGW, PGW or PCRF. VNFs can be deployed on a Network Function Virtualization (NFV) infrastructure (NFVI), which may include both hardware and software components of the network environment. NFV may thus virtualize separate network node functions into connected blocks that create communication services and exhibit public land mobile network (PLMN)-system behavior. Unlike conventional network hardware layouts in which a server may run a single instance of an operating system on physical hardware resources (e.g., CPU, RAM), the network operator may deploy VNFs on the NFVI to provide enhanced flexibility for network resource utilization, among others. As described in more detail below, actual resources may be dynamically allocated, updated, and deallocated based on the functionality desired. To this end, the hardware may support virtual machines (VMs) having multiple operating systems and individualized amounts and types of virtualized resources.

The NFVI may, as other equipment, have a life cycle that includes creation, modification and deletion. NFV life cycle management may enable operators to instantiate or terminate VNFs on the fly according to demand. This may accordingly provide a great deal of flexibility in modification of the network to scale network capacity. In legacy 3GPP systems, an Integration Reference Point (IRP) may be used as a standard for an Operations Support Systems (OSS) client (referred to as an IRP Manager) to refer and access IRP Agents in various instantiations, such as an Element Manager (EM) or Network Manager (NM). The IRP Manager may manage the networks via Configuration Management (CM) functions - Create, Delete, and Modify operations. The CM functions may enable the IRP Manager to create, delete, or modify an Information Object Class (IOC) representing various behaviors or functions of the network elements. However, there is no native command in the IRP to enable the NM to instantiate or terminate a VNF. Instead, legacy create, delete or modify functions may be used to respectively instantiate, terminate or update the VNF in order to support VNF lifecycle management functions. The legacy Network Resource Model (NRM) already defined in the 3GPP standard may be reused to minimize the impact to legacy systems, and may also be used in the NFV work item.

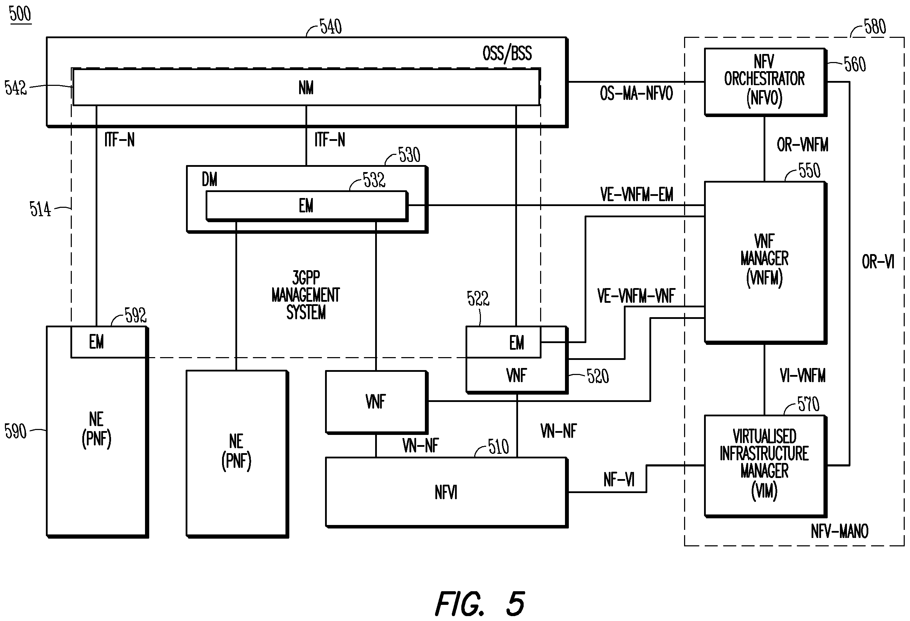

FIG. 5 illustrates a NFV network management architecture. The 3GPP NFV network management architecture 500 shown in FIG. 5 illustrates an exemplary manner in which NVF life cycle management can be supported by the 3GPP management system. As illustrated, the NFV network management architecture 500 may include a number of elements (each of which may contain physical and/or virtualized components), including a Network Virtualization Function Infrastructure (NVFI) 510, Network elements (NEs) 590, Virtual Network Functions (VNFs) 520, a Domain Manager (DM) 530, an Element Manager (EM) 532, a Network Manager (NM) 542, and a NFV Management and Orchestration (NFV-MANO) 580, The NFV-MANO 580 may comprise a Virtualized Infrastructure Manager (VIM) 540, a VNF Manager (VNFM) 550, and a Network Function Virtualization Orchestrator (NFVO) 560. The NM 542 may be contained in an Operations Support System/Business Support System (OSS/BSS) 520, with the DM 530 and NM 542 forming the 3GPP management system 514.

The NFV network management architecture 500 may be implemented by, for example, a data center comprising one or more servers in the cloud. The NFV network management architecture 500may include one or more physical devices and/or one or more applications hosted on a distributed computing platform, a cloud computing platform, a centralized hardware system, a server, a computing device, and/or an external network-to-network interface device, among others. In some cases, the virtualized resource performance measurement may include, for example, latency, jitter, bandwidth, packet loss, nodal connectivity, compute, network, and/or storage resources, accounting, fault and/or security measurements. The elements of the NFV network management architecture 500 may thus be contained in one or more of the devices shown in FIGS. 1-4 or other devices. In particular, the NEs 590 may comprise physical network functions (PNF) including both hardware such as processors, antennas, amplifiers, transmit and receive chains, as well as software. The VNFs 520 may be instantiated in one or more servers. Each of the VNFs 520, DM 530 and the NEs 590 may contain an EM 522, 532, 592.

The NFV Management and Orchestration (NFV-MANO) 580 may manage the NFVI 510. The NFV-MANO 580 may orchestrate the instantiation of network services, and the allocation of resources used by the VNFs 520. The NFV-MANO 580 may, along with the OSS/BSS 540, be used by external entities to deliver various NFV business benefits. The OSS/BSS 540 may include the collection of systems and management applications that a service provider (such as a telephone operator or telecommunications company) use to operate their business: management of customers, ordering, products and revenues - for example, payment or account transactions, as well as telecommunications network components and supporting processes including network component configuration, network service provisioning and fault handling. The NFV-MANO 580 may create or terminate a VNF 520, increase or decrease the VNF capacity, or update or upgrade software and/or configuration of a VNF. The NFV-MANO 580 may include a Virtualized Infrastructure Manager (VIM) 570, a VNF Manager (VNFM) 550 and a NFV Orchestrator (NFVO) 560. The NFV-MANO 580 may have access to various data repositories including network services, VNFs available, NFV instances and NFVI resources with which to determine resource allocation.

The VIM 570 may control and manage the NFVI resources via Nf-Vi reference points within the infrastructure sub-domain. The VIM 570 may further collect and forward performance measurements and events to the VNFM 550 via Vi-VNFM and to the NFVO 560 via Or-Vi reference points. The NFVO 560 may be responsible for managing new VNFs and other network services, including lifecycle management of different network services, which may include VNF instances, global resource management, validation and authorization of NFVI resource requests and policy management for various network services. The NFVO 560 may coordinate VNFs 520 as part of network services that jointly realize a more complex function, including joint instantiation and configuration, configuring required connections between different VNFs 520, and managing dynamic changes of the configuration. The NFVO 560 may provide this orchestration through an OS-Ma-NFVO reference point with the NM 542. The VNFM 550 may orchestrate NFVI resources via the VIM 570 and provide overall coordination and adaptation for configuration and event reporting between the VIM 520 and the EMs and NMs. The former may involve discovering available services, managing virtualized resource availability/allocation/release and providing virtualized resource fault/performance management. The latter may involve lifecycle management that may include instantiating a VNF, scaling and updating the VNF instances, and terminating the network service, releasing the NFVI resources for the service to the NFVI resource pool to be used by other services.

The VNFM 550 may be responsible for the lifecycle management of the VNFs 520 via the Ve-VNFM-VNF reference point and may interface to EMs 522, 532 through the Ve-VNFM--EM reference point. The VNFM 550 may be assigned the management of a single VNF 520, or the management of multiple VNFs 520 of the same type or of different types. Thus, although only one VNFM 550 is shown in FIG. 5, different VNFMs 550 maybe associated with the different VNFs 520 for performance measurement and other responsibilities. The VNFM 550 may provide a number of VNF functionalities, including instantiation (and configuration if required by the VNF deployment template), software update/upgrade, modification, scaling out/in and up/down, collection of NFVI performance measurement results and faults/events information and correlation to VNF instance-related events/faults, healing, termination, lifecycle management change notification, integrity management, and event reporting.

The VIM 570 may be responsible for controlling and managing the NFVI compute, storage and network resources, usually within one operator's Infrastructure Domain. The VIM 570 may be specialized in handling a certain type of NFVI resource (e.g. compute-only, storage-only, networking-only), or may be capable of managing multiple types of NFVI resources. The VIM 570 may, among others, orchestrate the allocation/upgrade/release/reclamation of NFVI resources (including the optimization of such resources usage) and manage the association of the virtualized resources to the physical compute, storage, networking resources, and manage repository inventory-related information of NFVI hardware resources (compute, storage, networking) and software resources (e.g. hypervisors), and discovery of the capabilities and features (e.g. related to usage optimization) of such resources.

The NVFI 510 may itself contain various virtualized and non-virtualized resources. These may include a plurality of virtual machines (VMs) 512 that may provide computational abilities (CPU), one or more memories 514 that may provide storage at either block or file-system level and one or more networking elements 516 that may include networks, subnets, ports, addresses, links and forwarding rules to ensure intra- and inter-VNF connectivity.

Each VNF 520 may provide a network function that is decoupled from infrastructure resources (computational resources, networking resources, memory) used to provide the network function. Although not shown, the VNFs 520 can be chained with other VNFs 520 and/or other physical network function to realize a network service. The virtualized resources may provide the VNFs 520 with desired resources. Resource allocation in the NFVI 510 may simultaneously meet numerous requirements and constraints, such as low latency or high bandwidth links to other communication endpoints.

The VNFs 520, like the NEs 590 may be managed by one or more EMs 522, 532, 592. The EM may provide functions for management of virtual or physical network elements, depending on the instantiation. The EM may manage individual network elements and network elements of a sub-network, which may include relations between the network elements. For example, the EM 522 of a VNF 520 may be responsible for configuration for the network functions provided by a VNF 520, fault management for the network functions provided by the VNF 520, accounting for the usage of VNF functions, and collecting performance measurement results for the functions provided by the VNF 520.

The EMs 522, 532, 592 (whether in a VNF 520 or NE 590) may be managed by the NM 542 of the OSS/BSS 540 through Itf-N reference points. The NM 542 may provide functions with the responsibility for the management of a network, mainly as supported by the EM 532 but may also involve direct access to the network elements. The NM 542 may connect and disconnect VNF external interfaces to physical network function interfaces at the request of the NFVO 560.

As above, the various components of the system may be connected through different reference points. The references points between the NFV-MANO 580 and the functional blocks of the system may include an Os-Ma-NFVO between the NM 542 and NFVO 560, a Ve-VNFM-EM between the EM 522, 532 and the VNFM 550, a Ve-VNFM-VNF between a VNF 520 and the VNFM 550, a Nf-Vi between the NFVI 510 and the VIM 570, an Or-VNFM between the NFVO 560 and the VNFM 550, an Or-Vi between the NFVO 560 and the VIM 570, and a Vi-VNFM between the VIM 570 and the VNFM 550. An Or-Vi interface may implement the VNF software image management interface and interfaces for the management of virtualized resources, their catalogue, performance and failure on the Or-Vi reference point. An Or-Vnfm interface may implement a virtualized resource management interface on the Or-Vnfm reference point. A Ve-Vnfm interface may implement a virtualized resource performance/fault management on the Ve-Vnfm reference point.

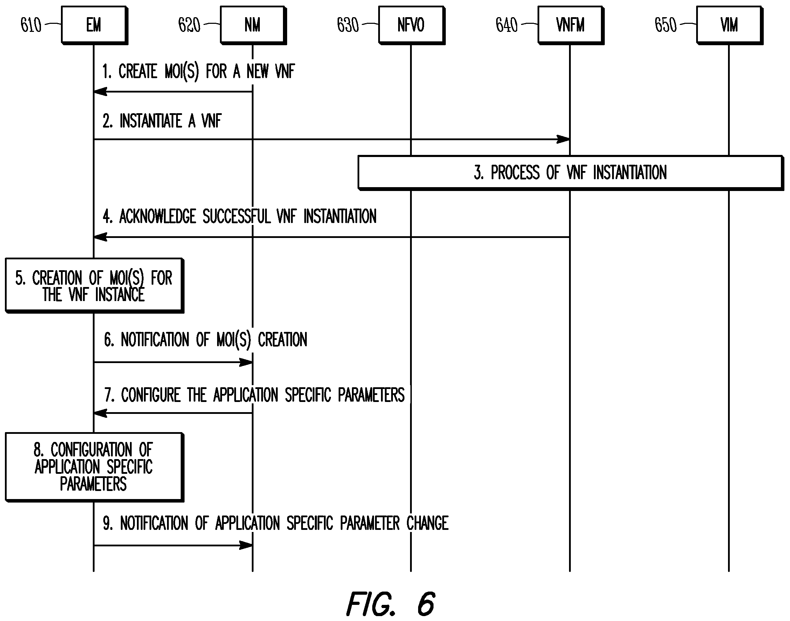

FIG. 6 illustrates a flow diagram of a Managed Object Instance (MOI) creation triggered by a VNF instantiation request from a network manager (NM) in accordance with an embodiment of the invention. The operations shown in FIG. 6 may be performed by the various elements shown in FIGS. 1-5. The operations generally illustrate the manner in which the NM 620 may instantiate a VNF by requesting the EM 610 to create one or more MOIs for the VNF instance.

At operation 1, the NM 620 may determine that creation of a new VNF is desired. The VNF to be created may be a MME, HLR, SGW, PGW, or PCRF, for example. The NM 620 may transmit a request to the EM 610 (of the DM) via an Itf-N reference point to create one or more MOIs to instantiate a new VNF. The request may contain a new attribute that indicates the type of the instantiation to be created.

The EM 610, having received the request, may determine the creation type, e.g. whether the MOI creation request is for a PNF or a VNF. After determining that the request is for a VNF, the EM 610 may then determine whether or not the VNF already exists. If the VNF for which the MOI is to be created already exists, the operations proceed to step 5 to create the MOI for the VNF. If the EM 610 determines that a new VNF is to be created, the operations proceed to operation 2. If, on the other hand, the EM 610 determines that the request is to create an MOI for a PNF, the operations proceed to operation 5, skipping operations 2-4. At operation 2, the EM 610 sends, via a Ve-VNFM-EM reference point, a request to VNFM 640 to instantiate the VNF.

At operation 3, the NFV-MANO may create and start the VM(s) and allocate networking resources for the VNF instance. Specifically, having received the request at operation 2, the VNFM 640 may work with NFVO 630 and VIM 650 to generate/allocate the VNF instance resources, communicating via the Or-Vnfm and Vi-Vnfm and Or-Vi reference points.

Once the VNF instance has been processed, the method continues to operation 4. At operation 4, the VNFM 640 sends an acknowledgement to the EM 610 via the Ve-VNFM-EM reference point. The acknowledgement include attributes such as VNF instance ID vnfInstanceId, which indicates the VNF has been successfully instantiated, along with the identification of the VNF.

The EM 610 may subsequently create one or more MOIs to represent the VNF instance. The MOI creation may be in response to the acknowledgment at operation 4 or in response to a determination that the MOI creation request at operation 1 is for a PNF, or an existing VNF. For example, in response to the acknowledgment of the MOI creation for an MME VNF, the EM 610 may create an IOC for the MME VNF. In this specific embodiment, the EM 610 may create an <<IOC>> MMEFunction, and other relevant IOC, and add the attribute vnfInstanceId to the <<IOC>> MMEFunction. As above, more than one MOI may be created by the EM 610 in response to a single request.

At operation 6, the EM 610 sends a notification of MOI creation to the NM 620. The MOI creation may be for one or more MOIs and may be for a VNF, as indicated, or for a PNF. The EM 610 sends the notification to the NM 620 over the Itf-N reference point used to transmit the initial request.

At operation 7, the NM 620 may send a request to configure application specific parameters for the VNF and MOI. The request to configure the application specific parameters may be sent from the NM 620 to the EM 610 over the Itf-N reference point.

At operation 8, the EM 610 configures the application specific parameters in response to receiving the request. Continuing the above embodiment, if the VNF is an MME VNF, the EM 610 may add the MME VNF to the MME pool through undertaking a variety of actions. These actions may include inserting the Distinguished Name (DN) of the MMEFunction into the attribute mMEPoolMemberList of <<IOC>> MMEPool and inserting the DN of the MMEPool into the attribute mMEPool of <<IOC>> MMEFunction.

After configuring the VNF at operation 8, the EM 610 may send a notification at operation 9 to the NM 620 using the Itf-N reference point. This notification may indicate to the NM 620 of the application specific parameters change. The notification may in some embodiments specify the change in addition to merely identifying that the change has occurred.

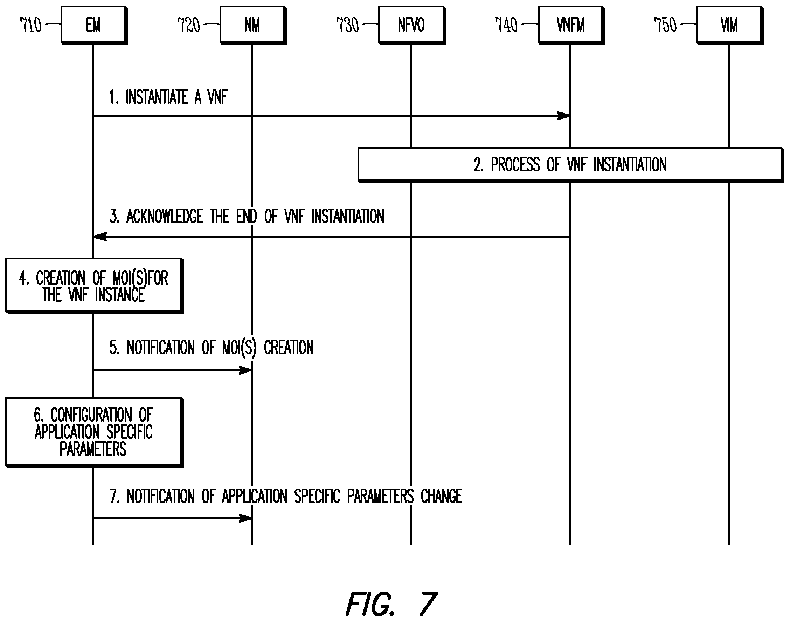

FIG. 7 illustrates a flow diagram of MOI creation triggered by a VNF instantiation request from an element manager (EM) in accordance with another embodiment of the invention. The operations shown in FIG. 6 may be performed by the various elements shown in FIGS. 1-5. The operations generally differ from those of FIG. 6 in that the EM 710 rather than the NM 720 may instantiate a VNF.

At operation 1, the EM 710 may determine a VNF is to be created. The EM 710 send a requests to the NFV-MANO to instantiate the VNF. As shown, the EM 710 sends the request to the VNFM 740 via the Ve-VNFM-EM reference point.

At operation 2, the NFV-MANO may create and start the VM(s) and allocate networking resources for the VNF instance. Specifically, having received the request at operation 2, the VNFM 740 may work with NFVO 730 and VIM 750 to generate/allocate the VNF instance resources, communicating via the Or-Vnfm and Vi-Vnfm and Or-Vi reference points.

Once the VNF instance has been instantiated by the NFV-MANO, the method continues to operation 3. At operation 3, the VNFM 740 sends an acknowledgement to the EM 710 via the Ve-VNFM-EM reference point. The acknowledgement indicates successful instantiation and may include attributes such as VNF instance ID vnfInstanceId, which provides the identification of the VNF.

The EM 710 subsequently creates one or more MOIs to represent the VNF instance. The MOI creation may be in response to the acknowledgment at operation 3. For example, in response to the acknowledgment of the MOI creation for an MME VNF, the EM 710 may create an IOC for the MME VNF. In this specific embodiment, the EM 710 may create an <<IOC>> MMEFunction, and other relevant IOC, and add the attribute vnfInstanceId to the <<IOC>> MMEFunction. As above, more than one MOI may be created by the EM 710 in response to a single request.

At operation 5, the EM 710 sends a notification of MOI creation to the NM 720. The MOI creation may be for one or more MOIs. The EM 710 sends the notification to the NM 720 over the Itf-N reference point used to transmit the initial request.

At operation 6, the EM 710 configures the application specific parameters in response to receiving the request. The configuration may occur without the NM 720 sending a request to configure the application specific parameters. Continuing the above embodiment, if the VNF is an MME VNF, the EM 710 may add the MME VNF to the MME pool through undertaking a variety of actions. These actions may include inserting the DN of the MMEFunction into the attribute mMEPoolMemberList of <<IOC>> MMEPool and inserting the DN of the MMEPool into the attribute mMEPool of <<IOC>> MMEFunction.

After configuring the VNF at operation 6, the EM 710 may send a notification at operation 7 to the NM 720 using the Itf-N reference point. This notification may indicate to the NM 720 of the application specific parameters change as well as specifying the change as above.

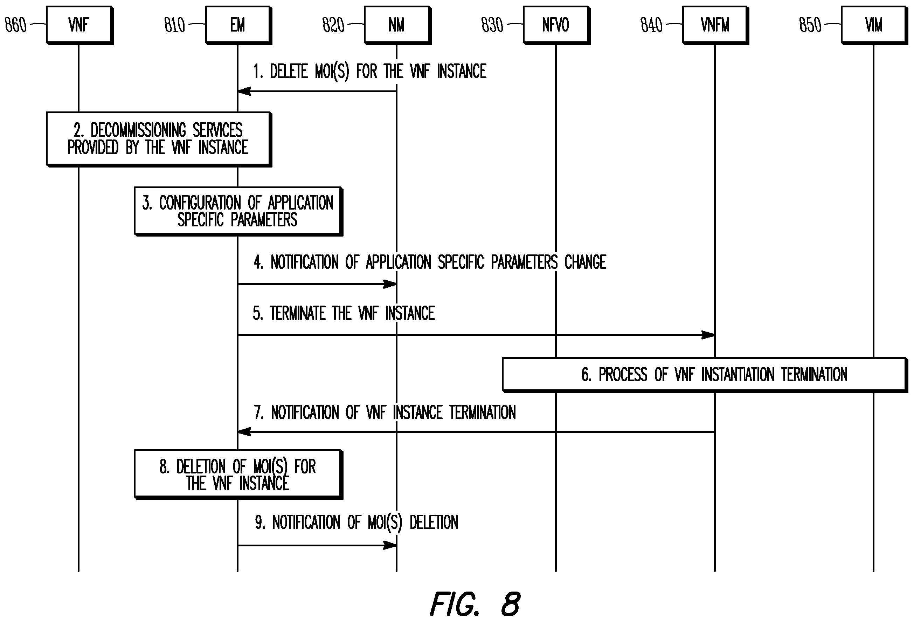

FIG. 8 illustrates a flow diagram of a VNF termination triggered by a MOI deletion request from an NM. The operations shown in FIG. 8 may be performed by the various elements shown in FIGS. 1-5. The operations generally describe a process in which the NM 820 terminates a VNF by requesting the EM 810 to delete one or more MOIs for the VNF instance.

At operation 1, the NM 820 may determine that deletion of an existing VNF is desired. The VNF to be deleted may be a MME, HLR, SGW, PGW, or PCRF, for example. The NM 820 may transmit a request to the EM 810 (of the DM) via an Itf-N reference point to delete one or more MOIs in an attempt to terminate the VNF instance represented by the MOI. The request may contain a new attribute that indicates the type of the instantiation to be deleted.

The EM 810, having received the request from the NM 820, may determine the VNF from the MOIs identifiers provided in the request. After determining the VNF, the EM 810 may at operation 2 initiate decommissioning of the services provided by the VNF instance 860 where the MOI(s) are to be deleted. For example, if the VNF instance 860 is an MME VNF, the EM 810 may offload the UEs being served by the VNF instance 860 to neighbouring MMEs in the MME pool.

After the VNF instance 860 has been decommissioned at operation 2, the information of the decommissioning is propagated to other components in the network. Specifically, at operation 3, the EM 810 may configure the application specific parameters. For example, if the VNF instance 860 is an MME VNF, the EM 810 may remove the MME VNF from the MME pool through deletion of the DN of the MMEFunction from the attribute mMEPoolMemberList of <<IOC>> MMEPool and deletion of the DN of the MMEPool from the attribute mMEPool of <<IOC>> MMEFunction.

After termination of the VNF instance 860 at operation 2 and reconfiguration of the parameters at operation 3, the EM 810 may send a notification at operation 4 to the NM 820 using the Itf-N reference point. This notification may indicate to the NM 820 of the application specific parameters change and may specify the change.

At operation 5, the EM 810 may send a request to the NFV-MANO to terminate the VNF instance 860. As shown, the EM 810 may send the request to the VNFM 840 via the Ve-VNFM-EM reference point. The request may include the VNF instance ID attribute vnfInstanceId, to VNFM to terminate the VNF instance.

At operation 6, in response to receiving the termination request from the EM 810, the NFV-MANO may terminate the VM and release the virtualized resources for the VNF instance 860. Specifically, having received the request at operation 5, the VNFM 840 may work with NFVO 830 and VIM 850 to terminate/release the VNF instance resources, communicating via the Or-Vnfm and Vi-Vnfm and Or-Vi reference points.

Once the VNF instance has been terminated and the resources released by the NFV-MANO, at operation 7, the VNFM 840 may send a notification to the EM 810 via the Ve-VNFM-EM reference point. The notification may indicate successful termination of the VNF instance 860 and may include attributes such as VNF instance ID vnfInstanceId, which provides the identification of the VNF instance 860.

Upon receiving the notification of termination of the VNF instance 860 from the VNFM 840 at operation 7, the EM 810 may subsequently delete one or more MOIs that represent the VNF instance 860 at operation 8. For example, in response to the acknowledgment of the deletion for the MME VNF by the VNFM 840, the EM 810 may delete the IOC for the MME VNF including deletion of the <<IOC>> MMEFunction and vnfInstanceId from the <<IOC>> MMEFunction. Note that as above, more than one MOI may be deleted by the EM 810 at the same time.

At operation 9, the EM 810 may send a notification of MOI deletion to the NM 820. The MOI deletion may be for one or more MOIs forming the VNF instance 860. The EM 810 may send the notification to the NM 820 over the Itf-N reference point.

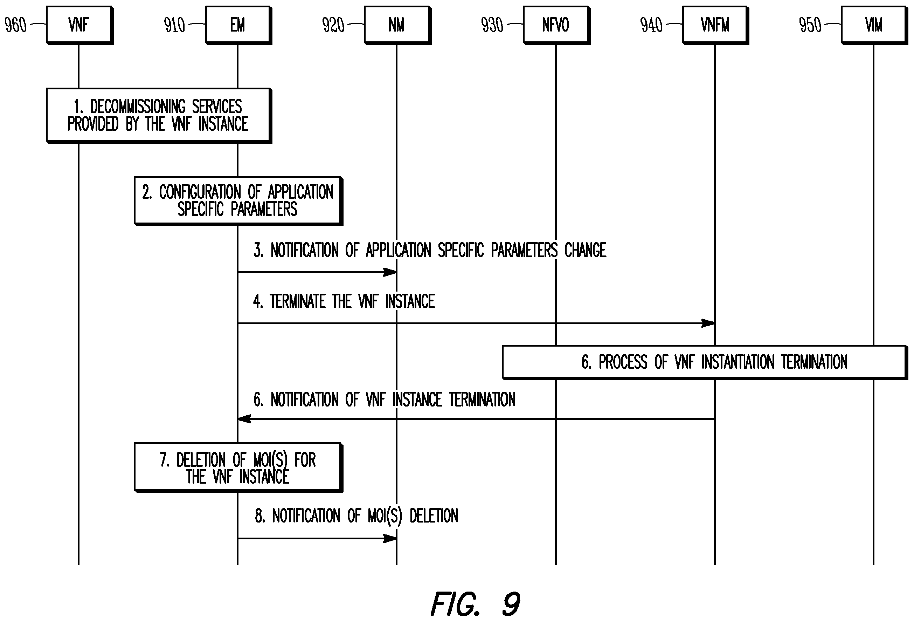

FIG. 9 illustrates a flow diagram of a MOI deletion triggered by VNF termination from an EM. The operations shown in FIG. 9 may be performed by the various elements shown in FIGS. 1-5. The operations generally differ from those of FIG. 8 in that the EM 910 rather than the NM 920 initiates deletion of the VNF instance 960.

At operation 1, the EM 910 may initiate decommissioning of the services provided by the VNF instance 960 where the MOI(s) are to be terminated. For example, if the VNF instance 960 is an MME VNF, the EM 910 may offload the UEs being served by the VNF instance 960 to neighbouring MMEs in the MME pool.

At operation 2, after decommissioning of the services provided by the VNF instance 960, the EM 910 may configure the application specific parameters. For example, if the VNF instance 960 is an MME VNF, the EM 910 may remove the MME VNF from the MME pool through deletion of the DN of the MMEFunction from the attribute mMEPoolMemberList of <<IOC>> MMEPool and deletion of the DN of the MMEPool from the attribute mMEPool of <<IOC>> MMEFunction.

At operation 3, after configuration of the parameters at operation 3, the EM 910 may send a notification to the NM 920 using the Itf-N reference point. This notification may indicate to the NM 920 of the application specific parameters change and may specify the change.

At operation 4, the EM 910 may send a request to the NFV-MANO to terminate the VNF instance 960. As shown, the EM 910 may send the request to the VNFM 940 via the Ve-VNFM-EM reference point. The request may include the VNF instance ID attribute vnfInstanceId, to VNFM to terminate the VNF instance.

At operation 5, in response to receiving the termination request from the EM 910, the NFV-MANO may terminate the VM and release the virtualized resources for the VNF instance 960. Specifically, having received the request at operation 4, the VNFM 940 may work with NFVO 930 and VIM 950 to terminate/release the VNF instance resources, communicating via the Or-Vnfm and Vi-Vnfm and Or-Vi reference points.

Once the VNF instance has been terminated and the resources released by the NFV-MANO, at operation 6 the VNFM 940 may send a notification to the EM 910 via the Ve-VNFM-EM reference point. The notification may indicate successful termination of the VNF instance 960 and may include attributes such as VNF instance ID vnfInstanceId, which provides the identification of the VNF instance 960.

Upon receiving the notification of termination of the VNF instance 960 from the VNFM 940, the EM 910 may subsequently delete one or more MOIs that represent the VNF instance 960 at operation 7. For example, in response to the acknowledgment of the deletion for the MME VNF by the VNFM 940, the EM 910 may delete the IOC for the MME VNF including deletion of the <<IOC>> MMEFunction and vnfInstanceId from the <<IOC>> MMEFunction. Note that as above, more than one MOI may be deleted by the EM 910 at the same time.

At operation 8, the EM 910 may send a notification of MOI deletion to the NM 920. The MOI deletion may be for one or more MOIs forming the VNF instantiation 960. The EM 910 may send the notification to the NM 920 over the Itf-N reference point.

Although embodiments showing creation and implementation examples showing deletion are described with reference to FIGs. 6-9, as indicated above, other processes other than creation and deletion may be implemented. For example, one or more of the MOIs of a VNF instantiation may be updated or otherwise changed using a similar method as those above. The updating may be initiated by the EM or by the NM in different embodiments. The requests and notifications may be similar to those described above, using 3GPP CM functions, with the ID of the VNF instance and additional attribute field identifying the type of instantiation (VNF or PNF).

The specification and drawings are to be regarded in an illustrative rather than a restrictive sense. The accompanying drawings that form a part hereof show, by way of illustration and not of limitation, specific embodiments. The embodiments illustrated are described in sufficient detail to enable those skilled in the art to practice the teachings disclosed herein. This Detailed Description, therefore, is not to be taken in a limiting sense, and the scope of the invention is defined only by the appended claims.

In this document, the terms "a" or "an" are used, as is common in patent documents, to include one or more than one, independent of any other instances or usages of "at least one" or "one or more." In this document, the term "or" is used to refer to a nonexclusive or, such that "A or B" includes "A but not B," "B but not A," and "A and B," unless otherwise indicated. In this document, the terms "including" and "in which" are used as the plain-English equivalents of the respective terms "comprising" and "wherein." Also, in the following claims, the terms "including" and "comprising" are open-ended, that is, a system, UE, article, composition, formulation, or process that includes elements in addition to those listed after such a term in a claim are still deemed to fall within the scope of that claim. Moreover, in the following claims, the terms "first," "second," and "third," etc. are used merely as labels, and are not intended to impose numerical requirements on their objects.

## Claims

1. An apparatus comprising:
processing circuitry (402); and
memory (404),
the processing circuitry configured to operate as an element manager, EM (532), that provides end-user functions for management of a network element, NE (590), wherein a Ve-Vnfm-em reference point is between the EM (532) and a Virtual Network Function Manager, VNFM (550), and an Itf-N interface between the EM (532) and a Network Manager, NM (542),
wherein the processing circuitry operating as the EM (532) is arranged to:
receive from the VNFM (550) through the Ve-Vnfm-em reference point a lifecycle management change notification indicating that a virtual network function, VNF (520), has been instantiated as part of lifecycle management of the VNF (520);
**characterized in that** the processing circuitry operating as the EM (532) is further arranged to:
create a managed object instance, MOI, after reception of the lifecycle management change notification;
transmit, through the Itf-N interface, a notification to the NM (542) of creation of the MOI; and
configure attributes of the MOI after notification to the NM (542) of the creation of the MOI.

2. The apparatus of claim 1, wherein the processing circuitry operating as the EM (532) is further arranged to configure the attributes of the MOI prior to reception of a request from the NM (542) to configure the attributes.

3. The apparatus of claim 1, wherein the processing circuitry operating as the EM (532) is further arranged to send a notification of a change of the attributes of the MOI to the NM (542) after the attributes have been configured.

4. The apparatus of any one or more of claims 1-3, wherein one of the attributes is a VNF Instance Identification, ID, which provides an identification of the VNF (520).

5. The apparatus of any one or more of claims 1-4, wherein the processing circuitry operating as the EM (532) is further arranged to trigger instantiation of the VNF (520).

6. The apparatus of any one or more of claims 1-5, wherein the processing circuitry operating as the EM (532) is further arranged to:
receive a notification from the VNFM (550) that indicates termination of the VNF (520),
in response to reception of the notification, modify the attributes of the MOI, and
after modification of the attributes of the MOI, send a notification to the NM (542) to indicate that a MO attribute value has been changed.

7. The apparatus of claim 6, wherein:
the notification indicates a VNF Instance Identification, which provides an identification of the VNF (520), and
said modification of the attributes of the MOI comprises removal of association of the VNF Instance Identification from the MOI.

8. The apparatus of any one or more of claims 1-7, wherein instantiation of the VNF (520) is triggered by the NM (542) through reception of a message from the NM (542) to create the MOI.

9. A computer-readable storage medium that stores instructions for execution by one or more processors of an element manager, EM (532), the one or more processors to configure the EM (532) to:
receive from a Virtual Network Function Manager, VNFM (550), through a Ve-Vnfm-em reference point a lifecycle management change notification indicating that a virtual network function, VNF (520), has been instantiated;
**characterized in that** the one or more processors to further configure the EM (532) to:
create a managed object instance, MOI, after reception of the notification;
notify, through a Itf-N interface, a Network Manager, NM (542), of creation of the MOI; and
configure attributes of the MOI after notification to the NM (542) of the creation of the MOI.

10. The medium of claim 9, wherein at least one of:
the EM (532) configures the attributes of the MOI free from a request from the NM (542) to configure the attributes, or
the instructions further configure the EM (532) to send a notification of a change of the attributes of the MOI to the NM (542) after the attributes have been configured.

11. The medium of claim 9 or 10, wherein at least one of:
the at least one attribute is a VNF Instance Identification, which provides an identification of the VNF (520),
the instructions further configure the EM (532) to trigger instantiation of the VNF (520), or
instantiation of the VNF (520) is triggered by the NM (542) through reception of a message from the NM (542) to create the MOI.

12. The medium of any one or more of claims 9-11, wherein the instructions further configure the EM (532) to:
receive notification from the VNFM (550) that indicates termination of the VNF (520),
in response to reception of the notification, modify the attributes of the MOI, and
after modification of the attributes, send a notification to the NM (542) to indicate that a MO attribute value has been changed.

13. The medium of any one or more of claims 9-12, wherein:
the notification indicates a VNF Instance Identification, which provides an identification of the VNF (520), and
said modification of the attributes of the MOI comprises removal of association of the VNF Instance Identification from the MOI.

## Patentansprüche

1. Einrichtung, umfassend:
eine Verarbeitungsschaltung (402); und
einen Speicher (404),
wobei die Verarbeitungsschaltung dafür ausgelegt ist, als Elementmanager, EM (532) zu arbeiten, der Endbenutzerfunktionen für die Verwaltung eines Netzelements, NE (590), bereitstellt, wobei ein Ve-Vnfm-em-Referenzpunkt zwischen dem EM (532) und einem Manager für virtuelle Netzfunktionen (VNFM, Virtual Network Function Manager, 550) und eine Itf-N-Schnittstelle zwischen dem EM (532) und einem Netzmanager, NM (542) liegt,
wobei die Verarbeitungsschaltung, die als EM (532) arbeitet, dafür eingerichtet ist:
vom VNFM (550) über den Ve-Vnfm-em-Referenzpunkt eine Änderungsbenachrichtigung zum Lebenszyklusmanagement zu erhalten, die angibt, dass eine virtuelle Netzfunktion, VNF (520), als Teil des Lebenszyklusmanagements der VNF (520) instanziiert wurde;
**dadurch gekennzeichnet, dass** die Verarbeitungsschaltung, die als EM (532) arbeitet, ferner dafür eingerichtet ist:
nach Erhalt der Änderungsbenachrichtigung zum Lebenszyklusmanagement eine verwaltete Objektinstanz, MOI (Managed Object Instance), zu erstellen;
über die Itf-N-Schnittstelle eine Benachrichtigung über die Erstellung der MOI an den NM (542) senden; und
nach der Benachrichtigung über die Erstellung der MOI an den NM (542) Attribute der MOI zu konfigurieren.

2. Vorrichtung nach Anspruch 1, wobei die Verarbeitungsschaltung, die als EM (532) arbeitet, ferner dafür eingerichtet ist, die Attribute der MOI vor dem Empfang einer Anforderung vom NM (542) zum Konfigurieren der Attribute zu konfigurieren.

3. Einrichtung nach Anspruch 1, wobei die Verarbeitungsschaltung, die als EM (532) arbeitet, ferner dafür eingerichtet ist, eine Benachrichtigung über eine Änderung der Attribute der MOI an den NM (542) zu senden, nachdem die Attribute konfiguriert wurden.

4. Einrichtung nach einem oder mehreren der Ansprüche 1-3, wobei eines der Attribute eine VNF-Instanz-Kennung, ID, ist, die eine Identifizierung der VNF (520) bereitstellt.

5. Einrichtung nach einem oder mehreren der Ansprüche 1-4, wobei die Verarbeitungsschaltung, die als EM (532) arbeitet, ferner dafür eingerichtet ist, die Instanziierung der VNF (520) auszulösen.

6. Einrichtung nach einem oder mehreren der Ansprüche 1-5, wobei die Verarbeitungsschaltung, die als EM (532) arbeitet, ferner dafür eingerichtet ist:
eine Benachrichtigung vom VNFM (550) zu empfangen, die die Beendigung der VNF (520) anzeigt,
als Reaktion auf den Empfang der Benachrichtigung die Attribute der MOI zu ändern und
nach Änderung der Attribute der MOI eine Benachrichtigung an den NM (542) zu senden, um anzuzeigen, dass ein MO-Attributwert geändert wurde.

7. Einrichtung nach Anspruch 6, wobei:
die Benachrichtigung eine VNF-Instanz-Kennung enthält, die eine Identifizierung der VNF (520) bereitstellt, und die Änderung der Attribute der MOI die Entfernung der Zuordnung der VNF-Instanz-Kennung aus der MOI umfasst.

8. Einrichtung nach einem oder mehreren der Ansprüche 1-7, wobei die Instanziierung der VNF (520) durch den NM (542) durch den Empfang einer Nachricht vom NM (542) zum Erstellen der MOI ausgelöst wird.

9. Computerlesbares Speichermedium, das Anweisungen zur Ausführung durch einen oder mehrere Prozessoren eines Elementmanagers, EM (532), speichert, wobei die ein oder mehreren Prozessoren den EM (532) dafür konfigurieren:
von einem Manager für virtuelle Netzfunktionen (VNFM, Virtual Network Function Manager, 550), über einen Ve-Vnfm-em-Referenzpunkt eine Änderungsbenachrichtigung zum Lebenszyklusmanagement zu empfangen, die anzeigt, dass eine virtuelle Netzfunktion, VNF (520), instanziiert wurde;
**dadurch gekennzeichnet, dass** die ein oder mehreren Prozessoren den EM (532) ferner dafür konfigurieren:
nach Erhalt der Benachrichtigung eine verwaltete Objektinstanz, MOI (Managed Object Instance), zu erstellen;
über eine Itf-N-Schnittstelle einen Netzmanager, NM (542) über die Erstellung der MOI zu benachrichtigen; und
nach der Benachrichtigung über die Erstellung der MOI an den NM (542) Attribute der MOI zu konfigurieren.

10. Medium nach Anspruch 9, wobei wenigstens eines der folgenden gilt:
Der EM (532) konfiguriert die Attribute der MOI ohne eine Anforderung zum Konfigurieren der Attribute durch den NM (542), oder
die Anweisungen konfigurieren den EM (532) ferner dafür, eine Benachrichtigung über eine Änderung der Attribute der MOI an den NM (542) zu senden, nachdem die Attribute konfiguriert wurden.

11. Medium nach Anspruch 9 oder 10, wobei wenigstens eines der folgenden gilt:
Das mindestens eine Attribut ist eine VNF-Instanz-Kennung, die eine Identifizierung der VNF (520) bereitstellt,
die Anweisungen konfigurieren den EM (532) ferner dafür, die Instanziierung der VNF (520) auszulösen, oder
die Instanziierung der VNF (520) wird durch den NM (542) durch den Empfang einer Nachricht vom NM (542) zum Erstellen der MOI ausgelöst.

12. Medium nach einem oder mehreren der Ansprüche 9-11, wobei die Anweisungen den EM (532) ferner dafür konfigurieren:
eine Benachrichtigung vom VNFM (550) zu empfangen, die die Beendigung der VNF (520) anzeigt,
als Reaktion auf den Empfang der Benachrichtigung die Attribute der MOI zu ändern und
nach Änderung der Attribute eine Benachrichtigung an das NM (542) zu senden, um anzuzeigen, dass ein MO-Attributwert geändert wurde.

13. Medium nach einem oder mehreren der Ansprüche 9-12, wobei:
die Benachrichtigung eine VNF-Instanz-Kennung enthält, die eine Identifizierung der VNF (520) bereitstellt, und die Änderung der Attribute der MOI die Entfernung der Zuordnung der VNF-Instanz-Kennung aus der MOI umfasst.

## Revendications

1. Appareil comprenant :
des circuits de traitement (402) ; et
une mémoire (404) ;
les circuits de traitement configurés pour fonctionner en tant que gestionnaire d'éléments, EM (532), qui fournit des fonctions d'utilisateur final pour la gestion d'un élément de réseau, NE (590), dans lequel un point de référence Ve-Vnfm-em se situe entre l'EM (532) et un gestionnaire de fonctions de réseau virtuel, VNFM (550), et une interface Itf-N entre l'EM (532) et un gestionnaire de réseau, NM (542),
dans lequel les circuits de traitement fonctionnant en tant que l'EM (532) sont agencés pour :
recevoir en provenance du VNFM (550) à travers le point de référence Ve-Vnfm-em une notification de changement de gestion de cycle de vie indiquant qu'une fonction de réseau virtuel, VNF (520), a été instanciée en tant que partie de la gestion du cycle de vie de la VNF (520) ;
**caractérisé en ce que** les circuits de traitement fonctionnant en tant que l'EM (532) sont agencés en outre pour :
créer une instance d'objet géré, MOI, après réception de la notification de changement de gestion de cycle de vie ;
transmettre, à travers l'interface Itf-N, une notification au NM (542) de création de la MOI ; et
configurer des attributs de la MOI après notification au NM (542) de la création de la MOI.

2. Appareil selon la revendication 1, dans lequel les circuits de traitement fonctionnant en tant que l'EM (532) sont agencés en outre pour configurer les attributs de la MOI avant réception d'une demande provenant du NM (542) pour configurer les attributs.

3. Appareil selon la revendication 1, dans lequel les circuits de traitement fonctionnant en tant que l'EM (532) sont agencés en outre pour envoyer une notification d'un changement des attributs de la MOI au NM (542) après que les attributs ont été configurés.

4. Appareil selon l'une quelconque ou plusieurs des revendications 1 à 3, dans lequel un des attributs est une identification d'instance, ID, VNF qui fournit une identification de la VNF (520).

5. Appareil selon l'une quelconque ou plusieurs des revendications 1 à 4, dans lequel les circuits de traitement fonctionnant en tant que l'EM (532) sont agencés en outre pour déclencher une instanciation de la VNF (520).

6. Appareil selon l'une quelconque ou plusieurs des revendications 1 à 5, dans lequel les circuits de traitement fonctionnant en tant que l'EM (532) sont agencés en outre pour :
recevoir une notification provenant du VNFM (550) qui indique une terminaison de la VNF (520),
en réponse à la réception de la notification, modifier les attributs de la MOI, et
après modification des attributs de la MOI, envoyer une notification au NM (542) pour indiquer qu'une valeur d'attribut MO a été changée.

7. Appareil selon la revendication 6, dans lequel :
la notification indique une identification d'instance VNF, qui fournit une identification de la VNF (520), et ladite modification des attributs de la MOI comprend la suppression de l'association de l'identification d'instance VNF de la MOI.

8. Appareil selon l'une quelconque ou plusieurs des revendications 1 à 7, dans lequel l'instanciation de la VNF (520) est déclenchée par le NM (542) à travers la réception d'un message provenant du NM (542) pour créer la MOI.

9. Support de stockage lisible par ordinateur qui stocke des instructions pour une exécution par un ou des processeurs d'un gestionnaire d'éléments, EM (532), le ou les processeurs devant configurer l'EM (532) pour :
recevoir en provenance d'un gestionnaire de fonctions de réseau virtuel, VNFM (550), à travers un point de référence Ve-Vnfm-em, une notification de changement de gestion de cycle de vie indiquant qu'une fonction de réseau virtuel, VNF (520), a été instanciée ;
**caractérisé en ce que** le ou les processeurs doivent en outre configurer l'EM (532) pour :
créer une instance d'objet géré, MOI, après réception de la notification ;
notifier, à travers une interface Itf-N, à un gestionnaire de réseau, NM (542), de la création de la MOI ; et
configurer des attributs de la MOI après notification au NM (542) de la création de la MOI.

10. Support selon la revendication 9, dans lequel au moins un élément parmi :
l'EM (532) configure les attributs de la MOI exempt d'une demande du NM (542) de configurer les attributs, ou
les instructions configurent en outre l'EM (532) pour envoyer une notification d'un changement des attributs de la MOI au NM (542) après que les attributs ont été configurés.

11. Support selon la revendication 9 ou 10, dans lequel au moins un élément parmi :
l'au moins un attribut est une identification d'instance VNF, qui fournit une identification de la VNF (520),
les instructions configurent en outre l'EM (532) pour déclencher une instanciation de la VNF (520), ou
l'instanciation de la VNF (520) est déclenchée par le NM (542) à travers la réception d'un message provenant du NM (542) pour créer la MOI.

12. Support selon l'une quelconque ou plusieurs des revendications 9 à 11, dans lequel les instructions configurent en outre l'EM (532) pour :
recevoir une notification provenant du VNFM (550) qui indique une terminaison de la VNF (520),
en réponse à la réception de la notification, modifier les attributs de la MOI, et
après modification des attributs, envoyer une notification au NM (542) pour indiquer qu'une valeur d'attribut MO a été changée.

13. Support selon l'une quelconque ou plusieurs des revendications 9 à 12, dans lequel :
la notification indique une identification d'instance VNF, qui fournit une identification de la VNF (520), et ladite modification des attributs de la MOI comprend la suppression de l'association de l'identification d'instance VNF de la MOI.
